(19) Europäisches Patentamt
European Patent Office
Office européen des brevets

(11) **EP 2 487 837 A1**

(12) **EUROPEAN PATENT APPLICATION**
published in accordance with Art. 153(4) EPC

(43) Date of publication:
**15.08.2012 Bulletin 2012/33**

(21) Application number: **10821987.4**

(22) Date of filing: **05.10.2010**

(51) Int Cl.:
*H04L 12/28* (2006.01)  *G06F 1/32* (2006.01)
*G06F 9/46* (2006.01)  *G06F 9/50* (2006.01)

(86) International application number:
**PCT/JP2010/067414**

(87) International publication number:
**WO 2011/043317 (14.04.2011 Gazette 2011/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.10.2009 JP 2009233366**

(71) Applicant: **NEC Corporation
Tokyo 108-8001 (JP)**

(72) Inventors:
• **MURAKAMI Takahiko
Tokyo 108-8001 (JP)**
• **YAMATO Junichi
Tokyo 108-8001 (JP)**

(74) Representative: **Vossius & Partner
Siebertstrasse 4
81675 München (DE)**

(54) **POWER SAVING SYSTEM AND POWER SAVING METHOD**

(57) Devices and interior equipments that need not operate in a server room are stopped and thereby power saving can be achieved. More specifically, consolidation of virtual machines (VMs) providing a service is performed to concentrate processing in a server in a certain rack among a group of racks in the server room, a rack having no operating server is stopped, processing by an interior equipment controlling the rack and its circumference environment also is stopped or adjusted, and thereby power saving can be achieved.

Fig. 1

## Description

### TECHNICAL FIELD

The present invention relates to a power saving system, and particularly to a power saving system in a virtual network environment.

### BACKGROUND ART

In recent years, a system that achieves flexible cloud computing based on cooperation of a network and a virtual machine (VM: Virtual Machine) to construct infrastructure is used. The virtual machine executes an application program to provide various services to a user through the network.

However, most of such the virtual machines operate on a plurality of physical servers installed in a group of racks in a server room of an organization such as a company. It is therefore necessary to continuously operate quite a lot of servers and switches and interior equipments in the server room, which causes enormous amount of power consumption and enormous amount of resource consumption.

At present, electric power supply to devices such as servers, switches and interior equipments in the server room that are required for operating the virtual machines is performed independently of usage state of the devices. Moreover, when stopping the electric power supply, a human need to confirm that the devices become a non-operating status and then manually and physically stop the devices.

Therefore, in order to achieve efficient power saving, it is desired to provide a method of controlling electric power supply to devices depending on usage state of the devices by cooperating a computer and a network with each other and concentrating virtual machines in a small number of servers depending on load.

As a related technique, Japanese Patent Publication JP-2009-169858 (Patent Literature 1) discloses a server system and a method of reducing power consumption of the server system. The Patent Literature 1 describes a server system that reduces the number of operating servers by performing migration of a virtual machine to reduce the power consumption. Moreover, it describes that a virtual machine is migrated to another server, if the power consumption of a server reaches the maximum value. It should be noted that the migration means migration and conversion of programs and data. In many cases, the migration is the one to a system having different environment such as OS.

Japanese Patent Publication JP-2009-176033 (Patent Literature 2) discloses a storage system and a method of reducing power consumption thereof. The Patent Literature 2 describes a storage system that reduces the number of operating servers by performing migration of a virtual server being a virtual machine to reduce the power consumption. Moreover, it describes a technique that monitors use frequencies of a network interface, a storage interface and a control device used by a virtual server, generates statistical information for each period of time, and determines an operating ratio of the virtual server.

Japanese Patent Publication JP-2003-281008 (Patent Literature 3) discloses a server computer load distribution device, a server computer load distribution method, a server computer load distribution program and a server computer system. The Patent Literature 3 describes a technique that controls power in units of infrastructure, a data center, a work station, a rack and a blade to suppress unnecessary power consumption.

Japanese Patent Publication JP-2009-181571 (Patent Literature 4) discloses a method of determining and dynamically controlling energy consumption in a large-scale data center or IT infrastructure. The Patent Literature 4 describes a system that operates only an optimum number of servers such that available data supply capacity by a server system becomes optimum with respect to the amount of data request to servers.

### CITATION LIST

### PATENT LITERATURE

[Patent Literature 1] Japanese Patent Publication JP-2009-169858
[Patent Literature 2] Japanese Patent Publication JP-2009-176033
[Patent Literature 3] Japanese Patent Publication JP-2003-281008
[Patent Literature 4] Japanese Patent Publication JP-2009-181571

### SUMMARY OF INVENTION

An object of the present invention is to provide a power saving system that performs load determination and power saving based on cooperation of a computer and a network.

A power saving system according to the present invention has a management device and a controller. The management device monitors communication information of a service provided by virtual machines respectively operating on a plurality of servers, migrates a virtual machine to another server based on service load calculated from the communication information with respect to each of the virtual machines, and puts a server having no operating virtual machine into a non-operating status. The controller sets route information with respect to each flow in a switch forwarding communication packets regarding the service. Moreover, the controller changes the route information set in the switch in accordance with the migration of the virtual machine.

A power saving method according to the present invention is performed by a computer. The power saving method includes: monitoring communication information of a service provided by virtual machines respectively operating on a plurality of servers; migrating a virtual machine to another server based on service load calculated from the communication information with respect to each of the virtual machines, and putting a server having no operating virtual machine into a non-operating status; setting route information with respect to each flow in a switch forwarding communication packets regarding the service; and changing the route information set in the switch in accordance with the migration of the virtual machine.

A storage medium according to the present invention stores a power saving program that causes a computer to perform the following step. The computer, which reads the power saving program from the storage medium and executes it, performs: (first step) monitoring communication information of a service provided by virtual machines respectively operating on a plurality of servers; (second step) migrating a virtual machine to another server based on service load calculated from the communication information with respect to each of the virtual machines, and putting a server having no operating virtual machine into a non-operating status; (third step) setting route information with respect to each flow in a switch forwarding communication packets regarding the service; and (fourth step) changing the route information set in the switch in accordance with the migration of the virtual machine.

Thus, consolidation of virtual machines (VMs) providing a service can be performed. A server having no operating virtual machine is put into a non-operating status, and thereby power saving can be achieved. Moreover, virtual machines can be concentrated on a server in a certain rack among a group of racks by migrating a virtual machine, which can reduce devices and equipments necessary for providing the service. By stopping the unnecessary devices and equipments, power saving can be achieved.

## BRIEF DESCRIPTION OF DRAWINGS

Fig. 1 is a block diagram showing a configuration example of a power saving system according to the present invention;
Fig. 2 is a sequence diagram showing basic processing of a service;
Fig, 3 is a sequence diagram showing information collection and trigger for changing configuration after setting flow definition information;
Fig. 4 is a flow chart showing operating resource optimization processing;
Fig. 5 is a flow chart showing processing of determining a migration destination server;
Fig. 6 is a flow chart showing operation processing; and
Fig. 7 is a flow chart showing stop processing.

## DESCRIPTION OF EMBODIMENTS

Exemplary embodiments of the present invention will be described below with reference to the attached drawings.

<Basic Configuration>

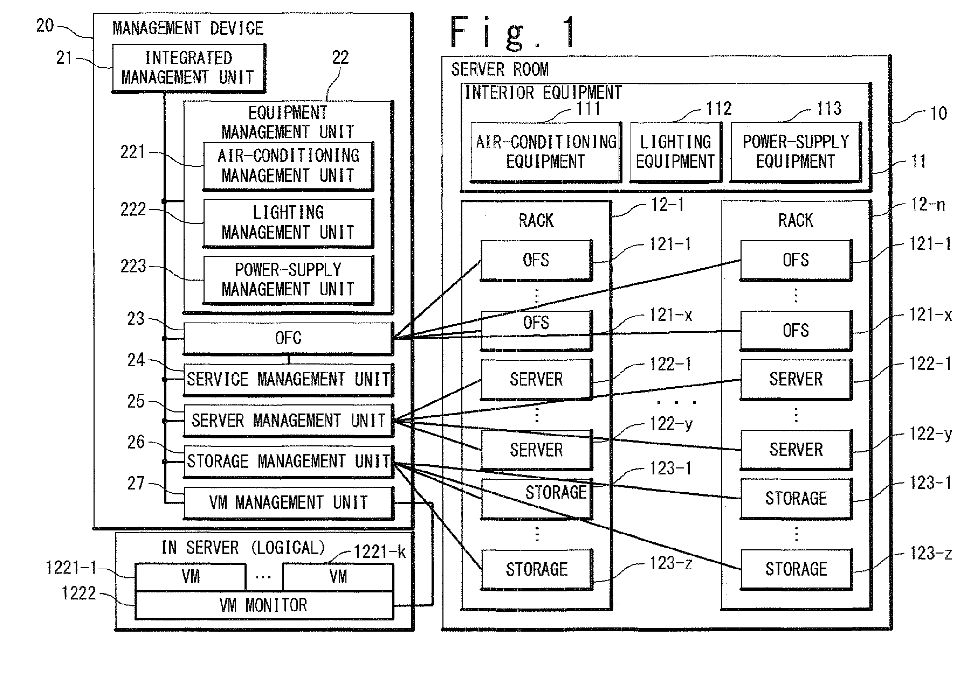

As shown in Fig. 1, a power saving system according to the present invention has a server room 10 and a management device 20.

The server room 10 is a room for installing a large number of servers in an organization such as a company. It should be noted that the server room is just an example. In practice, an environment similar to the server room may be used as the server room 10 without departing from a scope of the present invention. The management device 20 is for managing environment in the server room 10 and is connected through a network to various equipments and devices in the server room 10. One management device 20 may manage a plurality of server rooms 10. On the contrary, a plurality of management devices 20 may manage one server room 10. For simplicity, a case where one management device 20 manages one server room 10 will be described here.

The server room 10 includes an interior equipment 11 and a rack 12 (12-i, i = 1 to n: n is arbitrary).

The interior equipment 11 includes an air-conditioning equipment 111, a lighting equipment 112 and a power-supply equipment 113.

The air-conditioning equipment 111 is a general air-conditioner in the server room. The air-conditioning equipment 111 performs air-conditioning control, stops the air-conditioning control, makes an adjustment to temperature setting / air volume / target range and so forth, in response to a signal or a command received through a network. Here, the air-conditioning equipment 111 includes an air-conditioner in charge of air-conditioning for the entire area of the room and an air-conditioner installed near or on a rack. A group of racks that is cooled by a single air-conditioner is hereinafter referred to as an "air-conditioning group" regarding the air-conditioner. That is, the single air-conditioner cools the racks belonging to the air-conditioning group regarding the air-conditioner. The air-conditioning equipment 111 is exemplified by an AHU (Air Handling Unit), a high heat density cooling system, a heat exchanger, an air-conditioner, a blast fan and the like. The air-conditioning equipment 111 may be a water-cooling system, because it is essentially the same. In practice, it is not limited to these examples.

The lighting equipment 112 is a general light in the server room. The lighting equipment 112 illuminates or darkens a specified position, in response to a signal or a command received through a network. Here, the lighting equipment 112 includes a light illuminating the entire area of the room and a light installed near or on a rack. A group of racks that is illuminated by a single light is hereinafter referred to as a "lighting group" regarding the light. That is, the single light illuminates the racks belonging to the lighting group regarding the light. The lighting equipment 112 is exemplified by a fluorescent, a fluorescent lamp, an LED (Light Emitting Diode) lighting, a light bulb and the like. In practice, it is not limited to these examples.

The power-supply equipment 113 is a general power-supply device in the server room. The power-supply equipment 113 performs electric power supply, stops the electric power supply, makes an adjustment to supplied power and so forth, in response to a signal or a command received through a network. Here, the power-supply equipment 113 includes a power-supply device for supplying power to the servers and various network devices, a power-supply device for supplying power to the air-conditioning equipment and a power-supply device for supplying power to the lighting equipment. A group of racks to which power is supplied from a single power-supply device is hereinafter referred to as a "power-supply group" regarding the power-supply device. That is, the single power-supply device supplies power to the racks belonging to the power-supply group regarding the power-supply device. The power-supply equipment 113 is exemplified by an intelligent PDU (Power Distribution Unit: a power-supply tap for rack), an UPS (Uninterruptible Power Supply) and the like. In practice, it is not limited to these examples.

The rack 12 (12-i, i = 1 to n) is an electronic-device storage rack that is installed in an IDC (Internet Data Center) and the like and has a shape with which a rack-mountable server can be efficiently mounted thereon. A group of electronic devices that is installed in a single rack is hereinafter referred to as a "rack group" regarding the rack. That is, the single rack stores the electronic devices belonging to the rack group regarding the rack.

Each rack 12 (12-i, i = 1 to n) has an OFS (OpenFlow Switch) 121 (121-i, i = 1 to x: x is arbitrary), a server 122 (122-i, i = 1 to y: y is arbitrary) and a storage 123 (123-i, i = 1 to z: z is arbitrary). It should be noted that a configuration in the rack (e.g. the number of servers) can be different for each rack.

The OFS 121 (121-i, i = 1 to x) is a physical switch. There exists at least one OFS 121 in the rack. The server 122 (122-i, i = 1 to y) is connected to the OFS 121 (121-i, i = 1 to x) in the same rack. Connection between racks is achieved by connecting the OFS in a rack with the OFS in another rack.

In order to generate a redundant path, two or more OFSs 121 (121-i, i = 1 to x) are required. In this case, each server 122 (122-i, i = 1 to y) is connected to the two or more different OFSs 121 (121-i, i = 1 to x). The OFS 121 (121-i, i = 1 to x) is exemplified by an edge router mounted on the rack. The OFS may exist not only in the rack but also between the server room 10 and the management device 20. In practice, it is not limited to these examples.

The server 122 (122-i, i = 1 to y) is a physical server. There exists at least one server 122 in the rack. The server 122 (122-i, i = 1 to y) is exemplified by a rack-mountable server. In practice, it is not limited to these examples.

Each server 122 (122-i, i = 1 to y) has a virtual machine (VM) 1221 (1221-i, i = 1 to k: k is arbitrary) and a virtual machine monitor (VMM: Virtual Machine Monitor) 1222.

The virtual machine 1221 (1221-i, i = 1 to k) is a logical server and operates on the server 122 (122-i, i = 1 to y) to provide a service. The service exemplified by a Web service is processing that is required by a user machine through a network and executed by an application program. In some cases, a plurality of servers (including logical server) may provide the same service.

A disk image used by the virtual machine 1221 (1221-i, i = 1 to k) is stored in a shared disk. The shared disk may be provided in each server 122 (122-i, i = 1 to y), the storage 123 (123-i, i = 1 to z), the OFS 121 (121-i, i = 1 to x) or a memory device shared by all the racks in the server room 10. Alternatively, the management device 20 may be provided with the shared disk.

A MAC (Media Access Control) address and an IP (Internet Protocol) address are assigned to the virtual machine 1221 (1221-i, i = 1 to k). The MAC address is a virtual MAC address and can be arbitrarily set. Similarly, the IP address is a virtual IP address and can be arbitrarily set. It should be noted that even when the virtual machine 1221 (1221-i, i = 1 to k) is migrated within the same server 122 (122-i, i = 1 to y) or between servers 122 (122-i, i = 1 to y), the MAC address and the IP address of the virtual machine 1221 (1221-i, i = 1 to k) are unchanged.

The virtual machine monitor 1222 monitors and manages generation, operation, migration, stop and deletion of the virtual machine 1221 (1221-i, i = 1 to k). In addition, the virtual machine monitor 1222 performs memory management for the virtual machine 1221 (1221-i, i = 1 to k). That is, the virtual machine monitor 1222 stores/reads data and program used by the virtual machine 1221 (1221-i, i = 1 to k) in/from the storage 123 (123-i, i = 1 to z).

Moreover, the virtual machine monitor 1222 can communicate with another virtual machine monitor. The communication between virtual machine monitors is communication between the virtual machines 1221 (1221-i, i = 1 to k) respectively belonging to different virtual machine monitors. It is possible to externally and directly communicate with the virtual machine 1221 (1221-i, i = 1 to k) operating on the virtual machine monitor 1222 by using the MAC address and the IP address of the virtual machine 1221 (1221-i, i = 1 to k) as the destination. It should be noted that the virtual machine monitor 1222 serves as a virtual switch that performs bridge connection between the virtual machines inside and outside of the server.

The storage 123 (123-i, i = 1 to z) is an auxiliary storage device that stores data and programs. The storage 123 (123-i, i = 1 to z) is exemplified by an HDD (Hard Disk Drive), an SSD (Solid State Drive) and the like.

The storage 123 (123-i, i = 1 to z) is not limited to a memory device built in the computer but may be a memory device installed in a peripheral equipment (e.g. external HDD) or an external server (e.g. storage server). For example, the storage 123 (123-i, i = 1 to z) may be a storage device based on DAS (Direct Attached Storage), FC-SAN (Fibre Channel - Storage Area Network), NAS (Network Attached Storage), IP-SAN (IP - Storage Area Network) and the like. That is, the storage 123 (123-i, i = 1 to z) is not necessarily provided in the rack. In practice, it is not limited to these examples.

The management device 20 has an integrated management unit 21, an equipment management unit 22, an OFC (OpenFlow Controller) 23, a service management unit 24, a server management unit 25, a storage management unit 26 and a virtual machine management unit 27.

The integrated management unit 21 manages the equipment management unit 22, the OFC 23, the service management unit 24, the server management unit 25, the storage management unit 26 and the virtual machine management unit 27 in a comprehensive manner. The integrated management unit 21 beforehand retains setting information necessary for the management.

Moreover, as necessary, the integrated management unit 21 collects information regarding the interior equipment 11, the OFS 121 (121-i, i = 1 to x), the server 122 (122-i, i = 1 to y) and the storage 123 (123-i, i = 1 to z) through the equipment management unit 22, the OFC 23, the service management unit 24, the server management unit 25, the storage management unit 26 and the virtual machine management unit 27, and edits and retains the collected information.

Furthermore, the integrated management unit 21 may instruct (give instructions to) the server management unit 25 and the virtual machine management unit 27 to migrate a virtual machine 1221 (1221-i, i = 1 to k) providing a service to a certain server 122 (122-i, i = 1 to y) to achieve consolidation.

The equipment management unit 22 has an air-conditioning management unit 221, a lighting management unit 222 and a power-supply management unit 223.

The air-conditioning management unit 221 activates, stops or adjusts the air-conditioning equipment 111 having a specified air-conditioning ID. More specifically, the air-conditioning management unit 221 transmits a signal or a command to the air-conditioning equipment 111 through the network to start/stop cooling by the air-conditioning equipment 111 and adjust cooling level (temperature setting, air volume, target range, the number of operating equipments, and so forth).

The lighting management unit 222 activates, stops or adjusts the lighting equipment 112 having a specified lighting ID. More specifically, the lighting management unit 222 transmits a signal or a command to the lighting equipment 112 through the network to turn ON/OFF the lighting equipment 112 and adjust lighting level (brightness, luminosity, target range, the number of operating equipments, and so forth).

The power-supply management unit 223 activates, stops or adjusts the power-supply equipment 113 having a specified power-supply ID. More specifically, the power-supply management unit 223 transmits a signal or a command to the power-supply equipment 113 through the network to start/stop power supply (power distribution) by the power-supply equipment 113 and adjust power supply level (supplied power, target range, the number of operating equipments, and so forth).

The OFC 23 is a controller that controls communication in the system based on the open flow (OpenFlow) technique.

The open flow is a technique that a controller (OFC 23) performs routing control and node control by setting, in accordance with flow definition information set as routing policy, route information (flow table) of each flow and multi-layer in a switch.

Details of the open flow are described in the following document: "OpenFlow Switch Specification Version 0.9.0 (wire Protocol 0x98), July 20, 2009, Current Maintainer: Brandon Heller (brandonh@stanford.edu)" <http://www.openflowswitch.org/documents/openflow-spec-v0.9.0.pdf>.

As a result, the routing control function is separated from a router and a switch, and the centralized control by the controller enables optimum routing and traffic management. The switch to which the open flow technique is applied handles communication not in units of packet or frame as in the conventional router/switch but in units of END2END (End to End) flow.

More specifically, the OFC 23 sets flow with respect to each switch or node to control an operation (for example, a packet data relay operation) of the switch or node.

[Example of Flow]

The flow defines processing (action) that should be performed with respect to a packet matching a predetermined rule. The rule of the flow is defined by a combination of some or all of a destination address, a source address, a destination port and a source port included in a header region of a MAC frame, and can be distinguished from another one. Note that the above-mentioned address includes the MAC (Media Access Control) address and the IP (Internet Protocol) address. In addition to that, information of an ingress port also can be used as the rule of the flow.

Here, the switch controlled by the OFC 23 includes the OFS 121 (121-i, i = 1 to x), a virtual switch that is a function of the virtual machine 1221 (1221-i, i = 1 to k), and the like. The node controlled by the OFC 23 includes the server 122 (122-i, i = 1 to y), the virtual machine 1221 (1221-i, i = 1 to k), the virtual machine monitor 1222, the storage 123 (123-i, i = 1 to z), and the like.

That is, the OFC 23 performs the node management by treating each of the OFS 121 (121-i, i = 1 to x), the server 122 (122-i, i = 1 to y) and the storage 123 (123-i, i = 1 to z) as the node.

For example, the OFC 23 monitors load imposed on each node and activates/stops the OFS 121 (121-i, i = 1 to x) having a specified switch ID. It should be noted that "stop" includes not only shut down of hardware but also transition to a power-saving mode such as stand-by, sleep and resting state.

The service management unit 24 performs management of a logical configuration and a physical configuration of the service. The service is provided by the virtual machines 1221 (1221-i, i = 1 to k) executing an application program for providing the service. In addition, the service management unit 24 monitors load with respect to each service. For example, the service management unit 24 collects information of the number of flows from the OFC 23.

The server management unit 25 monitors an operation of and load imposed on the server 122 (122-i, i = 1 to y). Moreover, the server management unit 25 activates/stops the server 122 (122-i, i = 1 to y) having a specified server ID. It should be noted that "stop" includes not only shut down of hardware but also transition to a power-saving mode such as stand-by, sleep and resting state.

The storage management unit 26 performs access control with respect to the storage 123 (123-i, i = 1 to z). The access control includes zoning by an FC (Fibre Channel) switch and the like. The zoning, which is one of applied functions provided by the FC switch, provides access control such as "Read/Write enable", "Read only" and "Invisible" with respect to each device and port.

The virtual machine management unit 27 performs management and migration of the virtual machine monitor 1222 on each server 122 (122-i, i = 1 to y). The virtual machine management unit 27 retains information regarding the virtual machine monitor 1222. Moreover, the virtual machine management unit 27 retains information regarding the virtual machine 1221 (1221-i, i = 1 to k) and the virtual switch operating on the virtual machine monitor 1222 and obtains it from the virtual machine monitor 1222 as appropriate.

The management device 20 is exemplified by a computer such as a personal computer (PC), a thin client server, a work station, a main frame and a super computer.

In this case, the integrated management unit 21, the equipment management unit 22, the OFC 22, the service management unit 24, the server management unit 25, the storage management unit 26 and the virtual machine management unit 27 can be achieved by a processor operating based on a program to execute predetermined processing, a memory for storing the program and various data, and a network interface for externally communicating through a network.

The above-mentioned processor is exemplified by a CPU (Central Processing Unit), a microprocessor, a micro controller, a semiconductor integrated circuit (IC) having a similar function, and the like.

The above-mentioned memory is exemplified by a semiconductor memory device such as a RAM (Random Access Memory), a ROM (Read Only Memory), an EEPROM (Electrically Erasable and Programmable Read Only Memory) and a flash memory, an auxiliary storage device such as an HDD (Hard Disk Drive) and an SSD (Solid State Drive), a removable disk such as a DVD (Digital Versatile Disk), a storage medium such as an SD (Secure Digital) memory card, and the like.

The above-mentioned network interface includes a semiconductor integrated circuit such as a board (mother board, I/O board) supporting the network communication, a network adaptor such as a NIC (Network Interface Card), a similar expansion card, a communication device such as an antenna, a communication port such as a connector, and the like.

The above-mentioned network is exemplified by the Internet, LAN (Local Area Network), wireless LAN (Wireless LAN), WAN (Wide Area Network), Backbone, a cable television (CATV) line, a fixed telephone network, a mobile telephone network, WiMAX, 3G (Third-Generation Cell Phone), a lease line, IrDA (Infrared Data Association), Bluetooth (registered trademark), a serial communication line, a data bus and the like.

It should be noted that the integrated management unit 21, the equipment management unit 22, the OFC 22, the service management unit 24, the server management unit 25, the storage management unit 26 and the virtual machine management unit 27 may be respectively achieved by separate computers.

In practice, it is not limited to these examples.

<Relationship between service and flow>

The flow is generated every time a user machine connects to a server in order to request the virtual machine 1221 (1221-i, i = 1 to k) for a service. That is, the flow corresponds to connection.

Here, the flow is defined by a combination of some or all of the destination address, the source address, the destination port number and the source port number in an address region of the TCP/IP (Transmission Control Protocol / Internet Protocol) packet, and can be distinguished from another one. It should be noted that the above-mentioned address includes the MAC address and the IP address.

If the same service is provided by a plurality of servers, the service and the flow can be associated with each other based on the destination IP address. In this case, the flow can be counted based on the destination IP address, and the number of services can be calculated from the number of flows. The number of services is equal to the number of flows existing concurrently and indicates load (service load) due to the services.

If the port number is different among the services, the service and the flow can be associated with each other based on the destination port number. In this case, the service is determined to be identical if the destination port number is the same. It is thus possible to count the number of flows associated with the services based on the destination port number and to calculate the number of services.

<Data Configuration>

Next, location and details of data used in the power saving system according to the present invention will be described.

Hereinafter, the term will be simplified as follows:

"rack" represents the rack 12 (12-i, i = 1 to n);
"switch" represents the OFS 121 (121-i, i = 1 to x) or the virtual switch of the virtual machine monitor 1222;
"OFS" represents the OFS 121 (121-i, i = 1 to x);
"server" represents the server 122 (122-i, i = 1 to Y);
"VM" represents the virtual machine 1221 (1221-i, i = 1 to k); and
"storage" represents the storage 123 (123-i, i = 1 to z).

The integrated management unit 21 retains interior equipment information, rack information, storage connection information and service logical configuration information.

The interior equipment information includes air-conditioning information, lighting information and power-supply information.

The air-conditioning information includes an air-conditioning ID, electric power information, operation status information and related rack information. The air-conditioning ID indicates identification information of the air-conditioning equipment 111. The electric power information indicates electric energy (wH) that can be reduced if the air-conditioning equipment 111 of the air-conditioning ID is stopped (or adjusted). The operation status information indicates a current operation status (operating / not-operating) of each electronic device installed in the rack 12 (12-i, i = 1 to n) belonging to the air-conditioning group regarding the air-conditioning equipment 111 of the air-conditioning ID. The related rack information includes information regarding a rack ID. The rack ID indicates identification information of the rack 12 (12-i, i = 1 to n) belonging to the air-conditioning group regarding the air-conditioning equipment 111 of the air-conditioning ID.

The lighting information includes a lighting ID, electric power information, operation status information and related rack information. The lighting ID indicates identification information of the lighting equipment 112. The electric power information indicates electric energy (wH) that can be reduced if the lighting equipment 112 of the lighting ID is stopped (or adjusted). The operation status information indicates a current operation status (operating / not-operating) of each electronic device installed in the rack 12 (12-i, i = 1 to n) belonging to the lighting group regarding the lighting equipment 112 of the lighting ID. The related rack information includes information regarding a rack ID. The rack ID indicates identification information of the rack 12 (12-i, i = 1 to n) belonging to the lighting group regarding the lighting equipment 112 of the lighting ID.

The power-supply information includes a power-supply ID, electric power information, operation status information and related rack information. The power-supply ID indicates identification information of the power-supply equipment 113. The electric power information indicates electric energy (wH) that can be reduced if the power-supply equipment 113 of the power-supply ID is stopped (or adjusted). The operation status information indicates a current operation status (operating / not-operating) of each electronic device installed in the rack 12 (12-i, i = 1 to n) belonging to the power-supply group regarding the power-supply equipment 113 of the power-supply ID. The related rack information includes information regarding a rack ID. The rack ID indicates identification information of the rack 12 (12-i, i = 1 to n) belonging to the power-supply group regarding the power-supply equipment 113 of the power-supply ID.

Here, for simplicity, let us consider a case where the air-conditioning equipment 111, the lighting equipment 112 and the power-supply equipment 113 each targets the same region in the server room 10. That is, the air-conditioning group, the lighting group and the power-supply group are the same group. In practice, however, it is not limited to these examples.

The rack information indicates information of each electronic device installed in the same rack. Here, the rack information includes a rack ID, operation status information and installed node information. The rack ID indicates identification information of the rack 12 (12-i, i = 1 to n). The operation status information indicates a current operation status (operating / not-operating) of each electronic device installed in the rack 12 (12-i, i = 1 to n) of the rack ID. The installed node information includes a node type, a node ID and operation status information. The node type indicates a type (switch / server / storage etc.) of the electronic device installed in the rack 12 (12-i, i = 1 to n). The node ID indicates identification information of the electronic device installed in the rack 12 (12-i, i = 1 to n). For example, the node ID indicates any of a switch ID, a server ID and a storage ID.

The operation status information indicates the operation status (operating / not-operating) of each electronic device installed in the rack 12 (12-i, i = 1 to n).

The storage connection information is information regarding a group of servers that can communicate with the storage. Here, the storage connection information includes a storage ID and connectable server information. The storage ID indicates identification information of the storage 123 (123-i, i = 1 to z). The connectable server information indicates identification information (MAC address etc.) of the server that can communicate with the storage of the storage ID.

The service logical configuration information is configuration information of nodes necessary for providing the service. For example, the service logical configuration information includes the rule of the first packet as trigger for connection, information regarding amount of constitution nodes, information (storage ID) regarding the storages used, and information (node ID: the server ID on which the VM is operating) regarding the nodes used. For example, the information regarding the amount of constitution nodes includes details of the nodes (type: VM, the number of nodes), amount of service provided by each VM, and amount of physical resources (memory, CPU etc.) occupied by each VM.

The OFC 23 retains topology information. Here, the topology information is map information representing a connection relationship in the network and corresponds to the flow definition information.

The topology information includes information regarding a connection status of the OFSs, the servers, the network and the like. The topology information is constituted by a group of sets connected to the monitor-target switch (the OFS, the virtual switch and the like) and generated with respect to each monitor-target switch.

Here, the topology information includes information regarding a switch ID, operation status information, the number of ports, and connection information of each port. The switch ID indicates identification information of the monitor-target switch. The operation status information indicates an operation status (operating / not-operating) of the monitor-target switch. The number of ports indicates the number of ports of the monitor-target switch. The connection information of each port includes connection type information and connection destination information. The connection type information includes information regarding a type (switch / server / storage / external network etc.) of the connection destination of the monitor-target switch. The connection destination information indicates identification information of the connection destination of the monitor-target switch. If the connection type is the switch, the connection destination information indicates the switch ID. If the connection type is the server or the storage, the connection destination information indicates the MAC address. If the connection type is the external network, the connection destination information indicates the external network ID.

The service management unit 24 retains number-of-services information.

The number-of-services information includes information regarding the number of provision and a response time. The number of provision indicates the number of provision of each service per unit time. The response time indicates an average value and a maximum value of the response time of each service.

The server management unit 25 retains server load information.

The server load information includes information regarding load condition and the number of available resources.

The load condition indicates load condition of each server per unit time. The number of available resources indicates the number of available resources of each server. Here, "the number of available resources of the server = the number of resources of the server - the number of reserved resources".

< Basic Processing of Service>

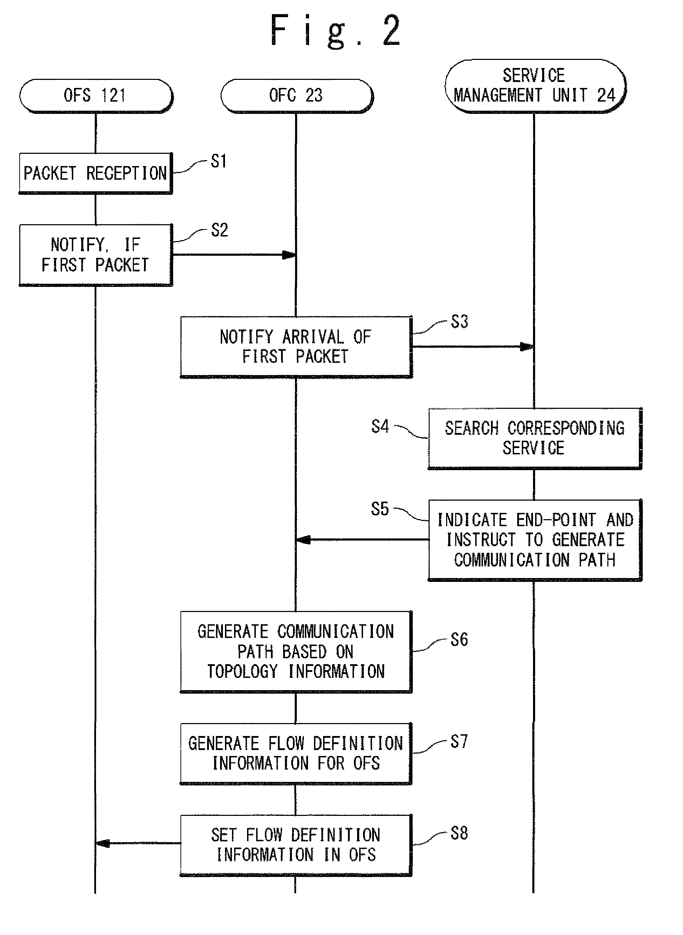

Basic processing of the service will be described with reference to Fig. 2.

(1) Step S1

A packet arrives at the OFS 121 (121-i, i = 1 to x) from the external network. That is, the OFS 121 (121-i, i = 1 to x) receives the packet from the external network.

(2) Step S2

If the received packet is the first packet, the OFS 121 (121-i, i = 1 to x) notifies the OFC 23 of the received packet as the first packet.

(3) Step S3

The OFC 23 notifies the service management unit 24 of the arrival of the first packet.

(4) Step S4

The service management unit 24 searches for a service corresponding to the notified first packet.

(5) Step S5

The service management unit 24 indicates the OFS 121 (121-i, i = 1 to x) that has detected the first packet and the VM used by the searched service as end-points, and instructs the OFC 23 to generate a communication path between the indicated end-points.

(6) Step S6

The OFC 23 calculates the communication path regarding the indicated end-points from the topology information. Here, the OFS 121 (121-i, i = 1 to x) of the non-operating status is not used in the calculation.

(7) Step S7

The OFC 23 generates the flow definition information for each OFS 121 (121-i, i = 1 to x) on the calculated communication path.

(8) Step S8

The OFC 23 sets the generated flow definition information in the corresponding OFS 121 (121-i, i = 1 to x).

<Collection of Information and Trigger for Changing Configuration>

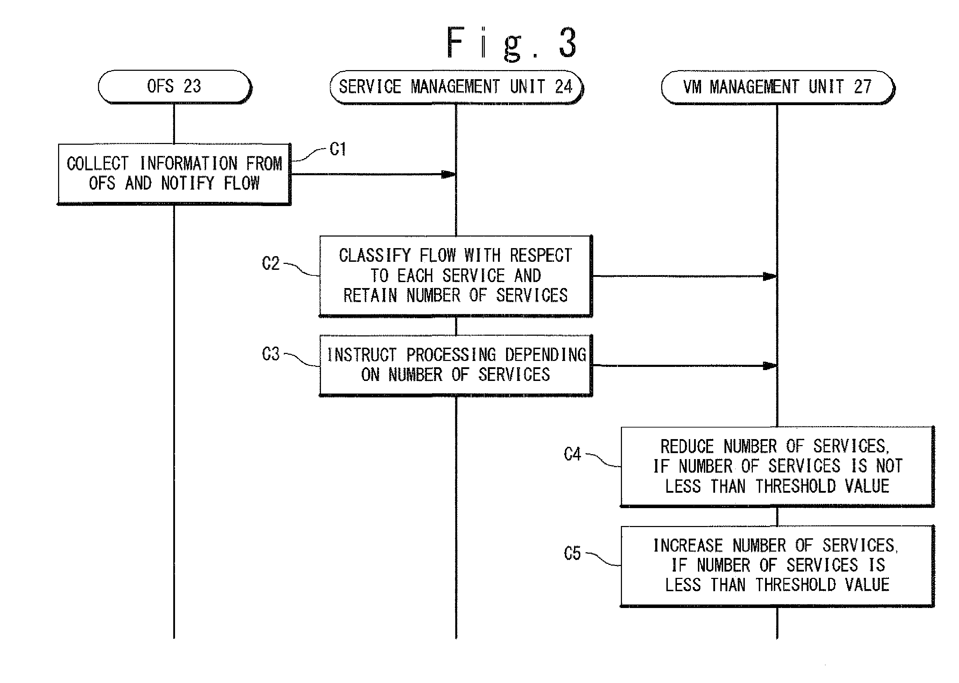

Collection of information after the setting of the flow definition information and trigger for changing configuration will be described with reference to Fig. 3.

(1) Step C1

The OFC 23 collects information from the OFS 121 (121-i, i = 1 to x), counts the number of flows and notifies the service management unit 24 of each flow.

(2) Step C2

The service management unit 24 classifies the flow with respect to each service and retains information of the number of services per unit time with respect to each service.

(3) Step C3

The service management unit 24 monitors the number of services and instructs, triggered by change in the number of services, the virtual machine management unit 27 to change the logical configuration and physical configuration of the service as follows.

(4) Step C4

If the number of services becomes equal to or more than a predetermined threshold value, the virtual machine management unit 27 performs processing for reducing the number of services to be less than the predetermined threshold value. The predetermined threshold value here may be an upper limit threshold value. For example, if "(the number of services) > (the number of services handled by one VM) x (the number of VMs)", the virtual machine management unit 27 increases the VMs assigned to the service in the server. That is, the virtual machine management unit 27 performs operating the VM for the service in the server.

Alternatively, the virtual machine management unit 27 may reduce the number of VMs in the server in order to increase the CPU necessary for the service. In this case, the VM is migrated from the server to another server and operation processing of the VM is performed in the other server.

Furthermore, if the number of VMs operating on the server becomes the smallest as compared with the other servers, the virtual machine management unit 27 consolidates the remaining VMs operating on the server to another server, if necessary. If no operating VM is left on the server due to the consolidation, the server management unit 25 stops the server. The processing may be repeated until the number of services becomes equal to each other.

(5) Step C5

If the number of services becomes less than a predetermined threshold value, the virtual machine management unit 27 performs processing for increasing the number of services within the predetermined threshold value. The predetermined threshold value here may be a lower limit threshold value. For example, if "(the number of services) < (the number of services handled by one VM) x (the number of VMs)", the virtual machine management unit 27 reduces the VMs for the service in the server. That is, the virtual machine management unit 27 performs stopping the VM for the service in the server.

Alternatively, the virtual machine management unit 27 may increase the number of VMs in the server in order to reduce the CPU necessary for the service. That is, a VM is migrated from another server to the server, and the VM is stopped in the other server. The stop processing of "power saving triggered by manual VM start/stop by an administrator" described later is performed.

Furthermore, the virtual machine management unit 27 consolidates the VM operating on the server having the smallest number of operating VMs to the server or another server having resources to spare, if necessary. The server management unit 25 stops the server with no operating VM left due to the consolidation. The processing may be repeated until the number of services becomes equal to each other.

<Operating Resource Optimization>

Next, operating resource optimization processing that aims at further power saving by migrating the VM will be described. The processing is activated triggered by end of VM stop processing. In practice, the optimization may be performed without the VM stop processing. Trigger in this case is, for example, that load of the entire system exceeds a threshold value. The threshold value here may be within a certain range between an upper limit threshold value and a lower limit threshold value. In this case, exceeding the threshold value means that departing from the certain range between the upper limit threshold value and the lower limit threshold value.

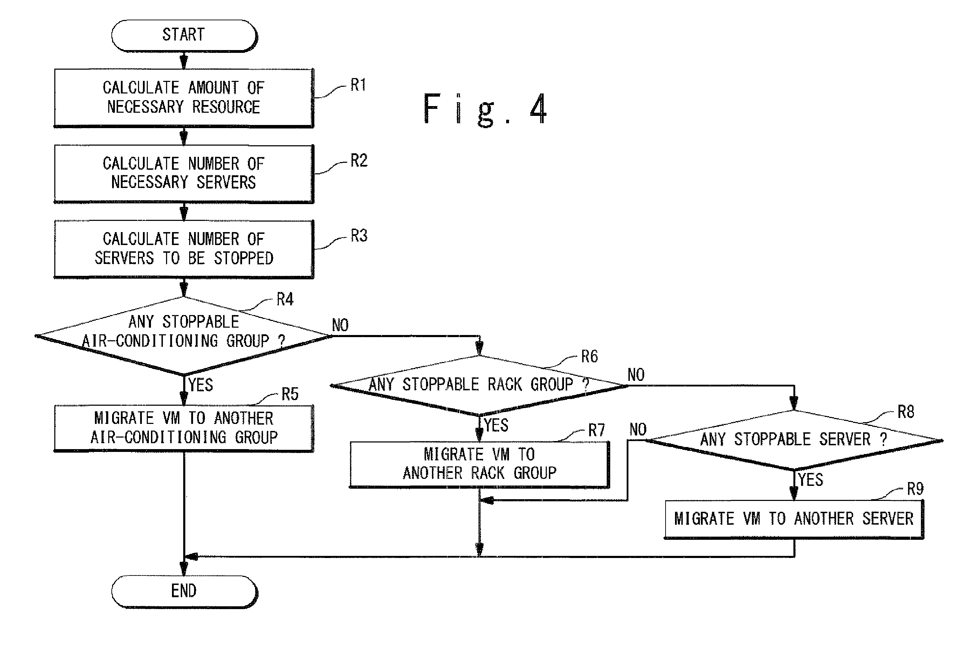

The operating resource optimization processing will be described with reference to Fig. 4.

(1) Step R1

The integrated management unit 21 calculates amount of necessary resources by using the following Equation (1).

CALCULATION OF AMOUNT OF NECESSARY RESOURCE
$R_i$ : AMOUNT OF NECESSARY RESOURCE OF VM FOR SERVICE i
$V_i$ : NUMBER OF VM FOR SERVICE i

$$\sum_{i=1}^{n}\left(R_i \times V_i\right) \qquad \cdots(1)$$

(2) Step R2

The integrated management unit 21 calculates the number of necessary servers by using the following Equation (2).
CALCULATION OF NUMBER OF NECESSARY SERVERS
$R$ : AMOUNT OF SERVER RESOURCE
$S$ : NUMBER OF NECESSARY SERVERS

$$S = \left\lceil \frac{\sum_{i=1}^{n}\left(R_i \times V_i\right)}{R} \right\rceil \qquad \cdots(2)$$

(3) Step R3

The integrated management unit 21 calculates the number (T) of servers to be stopped. When the number of operating servers is C, the number (T) of servers to be stopped is expressed by T = C - S.

(4) Step R4

The integrated management unit 21 performs searching of a stoppable air-conditioning group. For simplicity of explanation, a case of the air-conditioning group will be described as an example. However, the same applies to cases of the lighting group and the power-supply group. That is, "air-conditioning" can be replaced by "lighting" or "power-supply".
More specifically, the integrated management unit 21 searches for an air-conditioning group where all the racks in the air-conditioning group can be stopped by stopping T or less servers. Therefore, a total number of operating servers in the all racks in the stoppable air-conditioning group is equal to or less than T. If such the stoppable air-conditioning group is found, the integrated management unit 21 decides to stop the air-conditioning group. On the other hand, if there is no stoppable air-conditioning group, the integrated management unit 21 proceeds to processing of searching for a stoppable rack group (Step R6).

(5) Step R5

The integrated management unit 21 instructs the server management unit 25 and the virtual machine management unit 27 to migrate the VM from the stoppable air-conditioning group to another air-conditioning group not to be stopped. When the number of servers to be stopped due to the stopping of the stoppable air-conditioning group is X, the integrated management unit 21 subtracts X from the current number T of servers to be stopped to change the number T of servers to be stopped to T-X. Therefore, the new number T of servers to be stopped = the current number T of servers to be stopped - the number X of the stoppable servers.
More specifically, the integrated management unit 21 determines a migration destination server with regard to all VMs on the servers operating in the racks in the air-conditioning group to be stopped. Examples of the migration destination server include a server connectable to the storage used by the service to which each VM belongs, a server that does not belong to the rack in the air-conditioning group to be stopped, and a server having sufficient resources required by a VM that can establish a communication path between VMs constituting the service and the external network even if the OFS of the air-conditioning group stops.
The integrated management unit 21 instructs the server management unit 25 and the virtual machine management unit 27 to migrate each VM to the determined migration destination server. The integrated management unit 21 instructs the OFC 23 to stop the OFS in the rack to deactivate the OFS in the rack group. The integrated management unit 21 deactivates the rack group. The integrated management unit 21 instructs the equipment management unit 22 to stop air-conditioning to deactivate the air-conditioning group or adjust the level (temperature setting, air volume, target range, and so forth) of the air-conditioning.

If the stoppable air-conditioning group is searched for one by one in the processing of searching the stoppable air-conditioning group (Step R4), the integrated management unit 21 returns back to the processing of searching the stoppable air-conditioning group (Step R4) and searches for another stoppable air-conditioning group. A total number of servers operating in all the racks in the other stoppable air-conditioning group is equal to or less than the number T of servers to be stopped.

The integrated management unit 21 repeats the same processing until no stoppable air-conditioning group can be found. If there still remains the number of servers to be stopped even after no stoppable air-conditioning group is found, the integrated management unit 21 proceeds to the processing of searching for a stoppable rack group (Step R6).

(6) Step R6

The integrated management unit 21 performs searching of a stoppable rack group. More specifically, the integrated management unit 21 searches for a rack group where the rack can be stopped by stopping T or less servers. Therefore, a total number of operating servers in the stoppable rack group is equal to or less than T. If such the stoppable rack group is found, the integrated management unit 21 decides to stop the rack group. On the other hand, if there is no stoppable rack group, the integrated management unit 21 proceeds to processing of searching a stoppable server (Step R8).

(7) Step R7

The integrated management unit 21 instructs the server management unit 25 and the virtual machine management unit 27 to migrate the VM from the stoppable rack group to another rack group not to be stopped. When the number of servers to be stopped due to the stopping of the stoppable rack group is Y, the integrated management unit 21 subtracts Y from the current number T of servers to be stopped to change the number of servers to be stopped to T-Y. Therefore, the new number T of servers to be stopped = the current number T of servers to be stopped - the number Y of the stoppable servers.

More specifically, the integrated management unit 21 determines a migration destination server with regard to all VMs on the servers operating in the rack group to be stopped. Examples of the migration destination server include a server connectable to the storage used by the service to which each VM belongs, a server that does not belong to the rack group to be stopped, and a server having sufficient resources required by a VM that can establish a communication path between VMs constituting the service and the external network even if the OFS of the rack group stops.

The integrated management unit 21 instructs the server management unit 25 and the virtual machine management unit 27 to migrate each VM to the determined migration destination server. The integrated management unit 21 instructs the server management unit 25 and the virtual machine management unit 27 to stop the server to deactivate the server in the rack group. The OFC 23 stops the OFS in the rack to deactivate the OFS in the rack group. The integrated management unit 21 deactivates the rack group.

If the stoppable rack group is searched for one by one in the processing of searching for the stoppable rack group (Step R6), the integrated management unit 21 returns back to the processing of searching for the stoppable rack group (Step R6) and searches for another stoppable rack group. A total number of servers operating in all the racks in the other stoppable rack group is equal to or less than the number T of servers to be stopped.

The integrated management unit 21 repeats the same processing until no stoppable rack group can be found. If there still remains the number of servers to be stopped even after no stoppable rack group is found, the integrated management unit 21 proceeds to the processing of searching a stoppable server (Step R8).

(8) Step R8

The integrated management unit 21 performs searching of a stoppable server. More specifically, the integrated management unit 21 searches for a rack group having the smallest number of operating servers in the rack. The integrated management unit 21 determines T servers to be stopped. Therefore, a total number of stoppable servers is equal to or less than T. If such the stoppable server is found, the integrated management unit 21 decides to stop the server.

The reason for searching a rack group having the smallest number of operating servers in the rack is as follows. That is, it causes a rack which can be entirely stopped by stopping a small number of servers, which increases possibility of stopping the entire rack due to the operating resource optimization processing thereafter (at or after the next time)

That is, a rack having the stoppable server found by the processing this time is more likely to be selected as the stoppable rack group in the processing of searching for the stoppable rack group (Step R6) in the operating resource optimization processing at or after the next time.

Furthermore, the air-conditioning group having this rack is more likely to be selected as the stoppable air-conditioning group in the processing of searching of the stoppable air-conditioning group (Step R4) in the operating resource optimization processing at or after the next time.

(9) Step R9

The integrated management unit 21 instructs the server management unit 25 and the virtual machine management unit 27 to migrate the VM from the stop-target server. More specifically, the integrated management unit 21 determines a migration destination server with regard to all VMs on the server to be stopped. Examples of the migration destination server include a server connectable to the storage used by the service to which each VM belongs, a server not to be stopped, and a server having sufficient resources required by the VM. The integrated management unit 21 instructs the server management unit 25 and the virtual machine management unit 27 to migrate each VM to the determined server. The integrated management unit 21 instructs the server management unit 25 and the virtual machine management unit 27 to stop the server to set the server status in the rack group to the non-operating.

<Condition Regarding Connection between Racks>

It is desirable that connection between the racks satisfies the following conditions.

- Interconnection between the racks is eliminated as much as possible.
- An interconnection switch is provided with respect to each air-conditioning group.
- Connection between the air-conditioning groups is performed by an always-operating switch rack.

<Operating Resource Optimization (Extension)>

The integrated management unit 21 may instruct the OFC 23 to add the following processing, which can further reduce the number of operating OFSs.

The integrated management unit 21 instructs the OFC 23 to generate the topology information when an arbitrary OFS of the operating OFSs is stopped. When the communication path between the used VMs and the external network is established for all the services, the corresponding OFS is stopped, the status of the corresponding OFS in the rack group including the corresponding OFS is set to non-operating, and the corresponding OFS in the topology information is changed to non-operating.

If no operating node is left in the rack group as a result of the stopping of the OFS, the integrated management unit 21 instructs the OFC 23 to deactivate the rack group. If no operating rack is left in the air-conditioning group as a result of the deactivation of the rack group, the integrated management unit 21 instructs the equipment management unit 22 to stop the air-conditioning to deactivate the air-conditioning of the air-conditioning group or to adjust the level (temperature setting, air volume, target range, and so forth) of the air-conditioning.

<Processing of Determining Migration Destination Server>

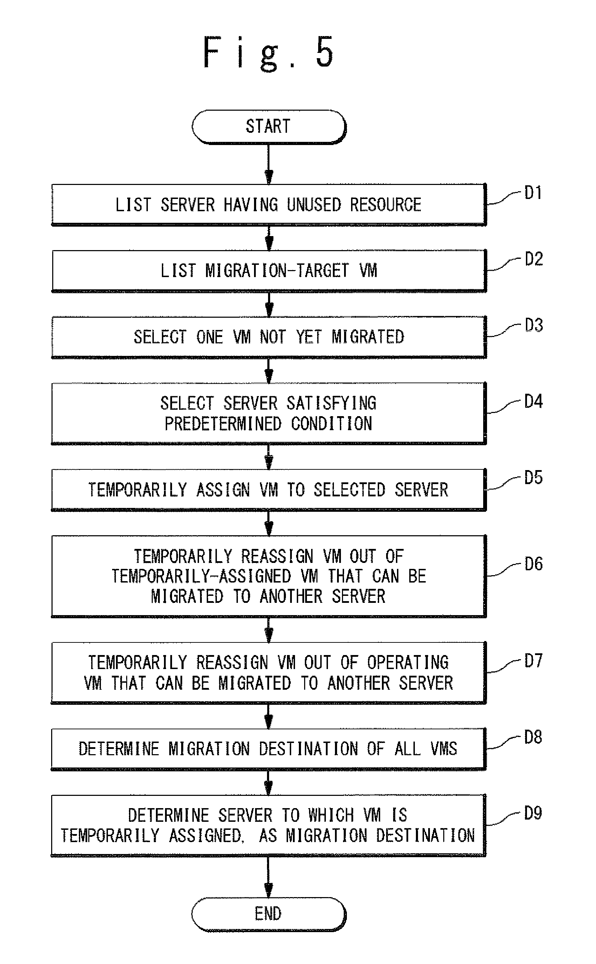

The processing of determining the migration destination server will be described with reference to Fig. 5. It should be noted that the integrated management unit 21 uses the topology information after the rack is stopped in the path calculation.

(1) Step D1

The integrated management unit 21 lists servers having unused resources.

(2) Step D2

The integrated management unit 21 lists migration-target VMs.

(3) Step D3

The integrated management unit 21 selects one VM not yet migrated from the listed VMs.

(4) Step D4

The integrated management unit 21 selects a server satisfying a predetermined condition from the listed servers. More specifically, the integrated management unit 21 selects a server that is connectable to the storage used by the service including the selected VM not yet migrated and can establish the communication path with the other VMs of the service and the external network.

(5) Step D5

The integrated management unit 21 checks whether or not the selected server has unused resource that can be assigned to the VM. If the selected server has unused resource that can be assigned to the VM, the integrated management unit 21 temporarily assigns the non-operating VM to the server and also reserves the unused resource. If there is any VM left whose migration destination is not yet determined, the integrated management unit 21 selects one VM not yet migrated again.

(6) Step D6

The integrated management unit 21 searches the VMs temporarily assigned to the selected server for a VM that can be migrated to another server having unused resource. If a VM that can be migrated to another server having unused resource is found, the integrated management unit 21 changes the temporal assignment destination of the VM, and also releases the reserved used resource and reserves the unused resource of the new temporal assignment destination. The integrated management unit 21 temporarily assigns the selected non-operating VM to the server and also reserves the unused resource. If there is any VM left whose migration destination is not yet determined, the integrated management unit 21 selects one VM not yet migrated again. In this manner, the migration destination of the VM is once reserved by the temporal assignment and then changed such that the unused resource is minimized.

(7) Step D7

The integrated management unit 21 searches operating VMs for a VM that can be migrated to another server having unused resource. If a VM that can be migrated to another server having unused resource is found, the integrated management unit 21 sets the VM as a migration-target, changes the temporal assignment destination, and also releases the reserved used resource and reserves the unused resource of the new temporal assignment destination. The integrated management unit 21 temporarily assigns the selected VM not yet migrated to the server and also reserves the unused resource. If there is any VM left whose migration destination is not yet determined, the integrated management unit 21 selects one VM not yet migrated again. If there is no VM that can be migrated to another server having unused resource, the integrated management unit 21 holds the selected VM not yet migrated.

(8) Step D8

If there is any VM left whose migration destination is not yet determined, the integrated management unit 21 selects one VM not yet migrated again.

(9) Step D9

The integrated management unit 21 determines the server to which each VM is temporarily assigned as the migration destination.

<Power Saving Triggered by Manual VM Start/Stop by Administrator>

Next, processing of "power saving triggered by manual VM start/stop by an administrator" will be described below in terms of "Trigger for Changing Configuration", "Operation Processing" and "Stop Processing".

<Trigger for Changing Configuration>

If the number of VMs with respect to each service is changed by an administrator, the integrated management unit 21 performs as follows. For example, if a VM is added to the service by the administrator, the integrated management unit 21 performs operation processing with respect to necessary servers and VMs. If a VM is deleted from the service by the administrator, the integrated management unit 21 performs stop processing with respect to unnecessary servers and VMs.

<Operation Processing>

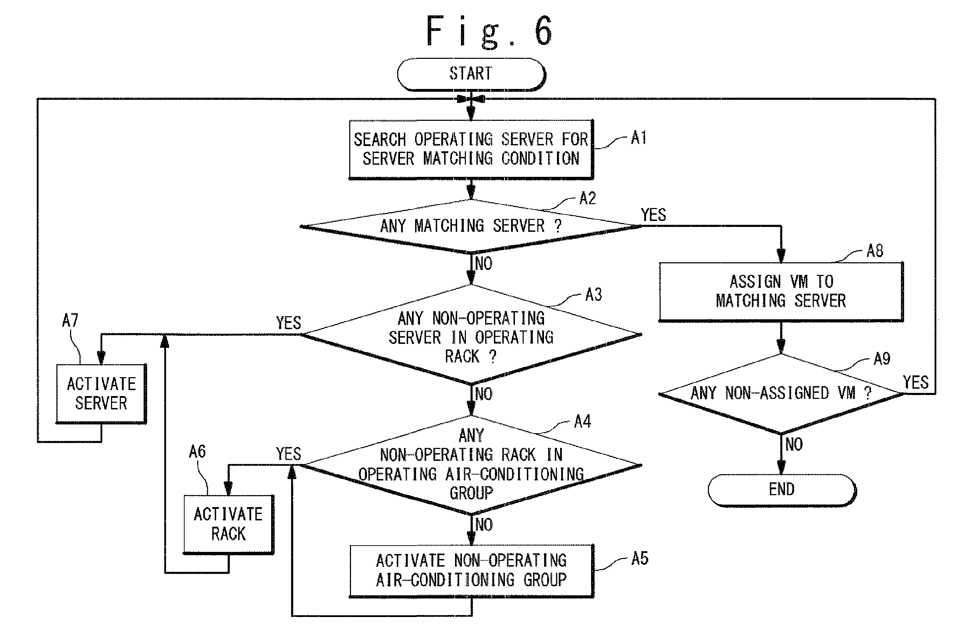

The operation processing will be described with reference to Fig. 6.

(1) Step A1

The administrator specifies a service and the number of additional VMs and instructs the integrated management unit 21 to start the operation processing. The integrated management unit 21 starts processing of searching operating servers for a server matching the condition.

(2) Step A2

The integrated management unit 21 checks whether or not there is a server matching the condition in the operating servers.
More specifically, the integrated management unit 21 uses the service configuration information and the storage connection information of the integrated management unit 21 to search for servers connectable to a storage used by the service. The integrated management unit 21 uses the rack group information to search the servers connectable to the storage used by the service for operating servers.
Furthermore, the integrated management unit 21 searches the found operating servers for a server that can provide resources required by the VM of the specified service (i.e. a server whose available resources are not less than necessary resources). Moreover, the integrated management unit 21 searches the servers that can provide resources required by the VM of the specified service for a server to which the VM of the specified service can be assigned.

(3) Step A3

If there is no server matching the condition among the operating servers, the integrated management unit 21 checks whether or not there is a non-operating server in the operating rack.

(4) Step A4

If there is no non-operating server in the operating rack, the integrated management unit 21 checks whether or not there is a non-operating rack in the operating air-conditioning group.

(5) Step A5

If there is no non-operating rack in the operating air-conditioning group, the integrated management unit 21 activates a non-operating air-conditioning group.
More specifically, the integrated management unit 21 instructs the equipment management unit 22 to activate and operate the non-operating air-conditioning. Also, the integrated management unit 21 refers to the air-conditioning information to change the status of the air-conditioning of the air-conditioning group to operating.
Here, for simplicity of explanation, the case of the air-conditioning group is described as an example. However, the same applies to cases of the lighting group and the power-supply group. That is, "air-conditioning" can be replaced by "lighting" or "power-supply".

(6) Step A6

If there is a non-operating rack in the operating air-conditioning group, the integrated management unit 21 activates the non-operating rack.
More specifically, the integrated management unit 21 instructs the OFC 23 to activate and operate the OFS in the non-operating rack. Also, the integrated management unit 21 instructs the OFC 23 to refer to the topology information, activates the OFS if the OFS in the activated rack group is non-operating, changes the status of the activated OFS in the rack group to operating, changes the status of the activated OFS in the rack group to operating, and changes the OFS in the topology information to operating. Moreover, the integrated management unit 21 refers to the rack information to change the status of the rack group to operating.

(7) Step A7

If there is a non-operating server in the operating rack, the integrated management unit 21 activates the non-operating server. After that, the integrated management unit 21 returns back to the processing of searching operating servers for a server matching the condition (Step A1) and repeats the same processing.

(8) Step A8

If there is a server matching the condition among the operating servers, the integrated management unit 21 assigns the VM of the specified service to the server matching the condition.

More specifically, the integrated management unit 21 instructs the virtual machine management unit 27 to operate the VM of the specified service on the server matching the condition. That is to say, the VM of the specified service is added to the server matching the condition. The integrated management unit 21 instructs the virtual machine management unit 27 to record information regarding the added VM on the service configuration information and retain it. The integrated management unit 21 instructs the virtual machine management unit 27 to reduce the amount of available resources of the server matching the condition by an amount used by the operated VM.

(9) Step A9

The integrated management unit 21 checks whether or not there is a VM not yet assigned. That is, the integrated management unit 21 checks whether or not the specified number of VMs all are assigned to the server matching the condition and the specified number of VMs has started operating on the server matching the condition.

More specifically, the integrated management unit 21 instructs the virtual machine management unit 27 to check whether or not communication between the VMs is possible when the specified number of VMs can be operated on the server matching the condition. The integrated management unit 21 instructs the OFC 23 to generate the topology information of the operating OFSs and the VMs constituting the service to perform route search. If the route is established by the instruction to the OFC 23, the integrated management unit 21 terminates the series of processing. On the other hand, if the specified number of VMs are not yet operated on the server matching the condition by the instruction to the virtual machine management unit 27, the integrated management unit 21 returns back to the processing of searching operating servers for a server matching the condition (Step A1) and repeats the same processing.

<Stop Processing>

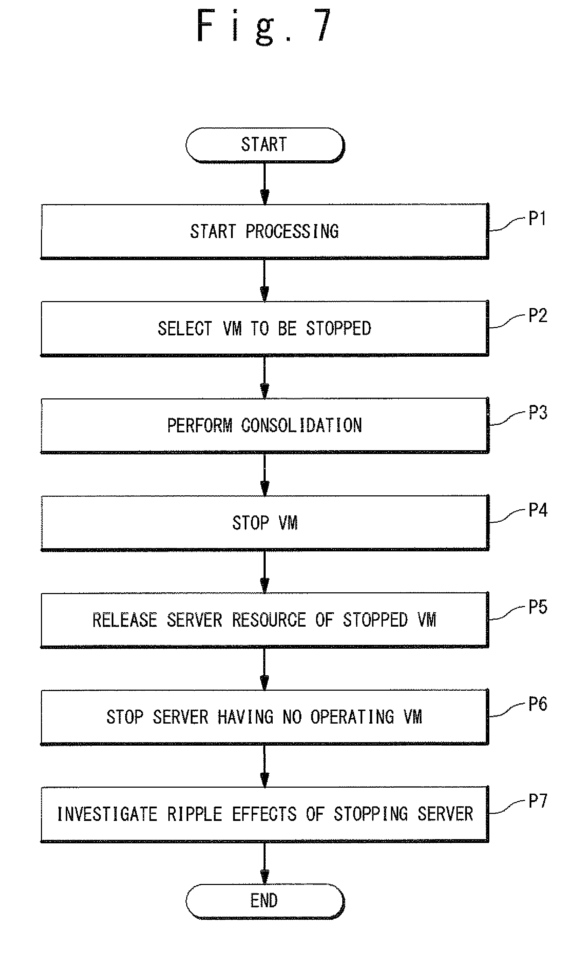

The stop processing will be described with reference to Fig. 7.

(1) Step P1

The administrator specifies a service and the number of VMs to be stopped and instructs the integrated management unit 21 to start the processing. The integrated management unit 21 starts the processing.

(2) Step P2

The integrated management unit 21 selects and determines a VM to be stopped from the VMs indicated by the service configuration information, the rack information and the air-conditioning information.

(Priority of selection)

As an example of priority of VM selection, a VM may be selected in accordance with the following order.

1. A VM that, when stopped, enables stopping of the server, stopping of the rack and stopping of the air-conditioning
2. A VM that, when stopped, enables stopping of the server and stopping of the rack
3. A VM that, when stopped, enables stopping of the server
4. A VM that, when stopped, causes the number of VMs in the server to be the smallest

(3) Step P3

The integrated management unit 21 instructs the virtual machine management unit 27 to perform consolidation such that no processing is assigned to the VM to be stopped.

(4) Step P4

The integrated management unit 21 instructs the virtual machine management unit 27 to stop the VM when all the processing is completed in the VM and decrease the number of operating VMs of the service.

(5) Step P5

The integrated management unit 21 instructs the server management unit 25 to increase the available resources of the server by an amount used by the deleted VM.

(6) Step P6

The integrated management unit 21 instructs the server management unit 25 to stop the server having no operating VM and change the status of the server in the rack group to non-operating.

(7) Step P7

The integrated management unit 21 investigates ripple effects of the stopping of the server.
More specifically, the integrated management unit 21 instructs the OFC 23 to check whether or not the operating service is affected by stopping the OFS in the rack if there is no operating server in the rack group as a result of the stopping of the server (i.e. whether or not there is a pattern where the communication path cannot be calculated). If it is not affected, the OFC 23 stops the OFS, changes the status of the OFS in the rack group to non-operating, and changes the OFS in the topology information to non-operating.
The integrated management unit 21 instructs the OFC 23 to deactivate the rack group if there is no operating node in the rack group as a result of the stopping of the OFS.
If there is no operating rack in the air-conditioning group as a result of the stopping of the rack group, the equipment management unit 22 stops the air-conditioning or adjusts the level of the air-conditioning (e.g. temperature setting, air volume, target range and so forth) and deactivates the air-conditioning of the air-conditioning group.

<Stop Processing (Extension)>

Another example of the stop processing will be considered hereinafter.
The integrated management unit 21 may instruct the OFC 23 to investigate whether or not another OFS can be deactivated after completion of the stop processing to increase non-operating resources. For example, the following three methods can be considered.

1. The integrated management unit 21 instructs the OFC 23 to generate the topology information where an arbitrary OFS of the operating OFSs is stopped, stop the OFS if all the communication paths regarding the VMs and the external network used for all the services can be established, change the status of the OFS in the rack group including the OFS to non-operating and change the OFS in the topology information to non-operating.
2. The integrated management unit 21 instructs the OFC 23 to deactivate a rack group if there is no operating node in the rack group as a result of the stopping of the OFS.
3. If there is no operating rack in the air-conditioning group as a result of the stopping of the rack group, the equipment management unit 22 stops the air-conditioning or adjusts the level of the air-conditioning (e.g. temperature setting, air volume, target range and so forth) and deactivates the air-conditioning of the air-conditioning group.

<Restrict Access to Storage>

When considering restriction of access to the storage in the present invention, the integrated management unit 21 needs to cooperate with the storage management unit 26 at the time of the VM activation (operation) or VM migration to appropriately restrict access to the storage.

<Load Determination (Extension)>

In the present invention, communication load in the network or processing load in the server depending on the service may be used as the service load, instead of the above-mentioned number of services. In this case, the logical configuration and the physical configuration of the server are changed triggered by change in the service load.
For example, the integrated management unit 21 calculates the service load in this case by using the following Equation (3). Here, n virtual machines (VMs) are operating on the server and each one virtual machine (VM) is providing the corresponding one service.

CALCULATION OF SERVICE LOAD

$A_i$ : NUMBER OF FLOWS REGARDING VMi PERFORMING SERVICE i
$B_i$ : CPU PROCESSING LOAD REGARDING VMi PERFORMING SERVICE i
$C_i$ : COMMUNICATION LOAD DUE TO SERVICE FOR UNIT FLOW REGARDING VMi PERFORMING SERVICE i
D: MAXIMUM COMMUNICATION CAPACITY OF SERVER
E: MAXIMUM CPU PROCESSING CAPACITY
F : SERVICE LOAD

$$F = \max\left( \frac{\sum_{i=1}^{n} C_i A_i}{D}, \frac{\sum_{i=1}^{n} B_i}{E} \right) \qquad \cdots(3)$$

There is known a method that calculates Ci from the flow statistical information with respect to each service.

In the above-mentioned Equation (3), F = 1 means that up to capacity limitation of the server is used.

It should be noted that resource efficiency is considered to be improved when the VMs are consolidated to the server such that the communication load and CPU load both become closer to 1.

<Supplementary Note>

While a part of or whole of the above-described exemplary embodiments may be described as the following Supplementary notes, it is not limited to that.

(Supplementary note 1)

A storage medium storing a power saving program that causes a computer to perform a power saving method comprising: monitoring communication information of a service provided by virtual machines respectively operating on a plurality of servers;
migrating a virtual machine to another server based on service load calculated from said communication information with respect to each of the virtual machines, and putting a server having no operating virtual machine into a non-operating status;
setting route information with respect to each flow in a switch forwarding communication packets regarding said service; and
changing the route information set in said switch in accordance with the migration of the virtual machine.

(Supplementary note 2)

The storage medium according to Supplementary note 1,
wherein the power saving method further comprises:

calculating said service load based on communication load in a network depending on said service and processing load in a server depending on said service.

(Supplementary note 3)

The storage medium according to Supplementary note 1 or 2, wherein the power saving method further comprises:

putting, if there exists a switch that need not operate as a result of the change of the route information set in said switch in accordance with the migration of the virtual machine, the switch that need not operate into a non-operating status.

(Supplementary note 4)

The storage medium according to any one of Supplementary notes 1 to 3,
wherein the power saving method further comprises:
migrating a virtual machine operating on a server in a rack in which said switch and said plurality of servers are installed to a server in another rack;
changing the route information set in said switch to pass through a switch outside of said rack; and
putting a whole of said rack including said switch and said plurality of servers into a non-operating status.

(Supplementary note 5)

The storage medium according to Supplementary note 4,
wherein the power saving method further comprises:
controlling an equipment making adjustment to a circumference environment condition of the rack; and
changing or stopping the adjustment of the circumference environment condition of said rack that is put into the non-operating status.

(Supplementary note 6)

The storage medium according to Supplementary note 5,
wherein the power saving method further comprises:

searching for a target that can be put into a non-operating status in units of a group of racks whose circumference environment condition is under control of said equipment, and then searching for a target that can be put into a non-operating status in units of a rack and then in units of a server.

(Supplementary note 7)

The storage medium according to Supplementary note 4 or 5,
wherein the power saving method further comprises:

controlling an air-conditioning equipment that cools a rack belonging to an air-conditioning group being a target of air-conditioning, and adjusting or stopping cooling by said air-conditioning equipment if all racks belonging to said air-conditioning group are put into the non-operating status;
controlling a lighting equipment that lights a rack belonging to a lighting group being a target of lighting, and adjusting or stopping lighting by said lighting equipment if all racks belonging to said lighting group are put into the non-operating status; and
controlling a power-supply equipment that supplies power to a rack belonging to a power-supply group being a target of power-supply, and adjusting or stopping power supply by said power-supply equipment if all racks belonging to said power-supply group are put into the non-operating status.
While the exemplary embodiments of the present invention have been described above, the present invention is not limited to these exemplary embodiments and can be modified as appropriate by those skilled in the art without departing from the spirit and scope of the present invention.

This application is based upon and claims the benefit of priority from Japanese patent application No. 2009-233366, the disclosure of which is incorporated herein in its entirety by reference.

**Claims**

1. A power saving system comprising:

a management device configured to monitor communication information of a service provided by virtual machines respectively operating on a plurality of servers, to migrate a virtual machine to another server based on service load calculated from said communication information with respect to each of the virtual machines, and to put a server having no operating virtual machine into a non-operating status; and
a controller configured to set route information with respect to each flow in a switch forwarding communication packets regarding said service,

wherein said controller changes the route information set in said switch in accordance with the migration of the virtual machine.

2. The power saving system according to claim 1,
   wherein said management device calculates said service load based on communication load in a network depending on said service and processing load in a server depending on said service.

3. The power saving system according to claim 1 or 2,
   wherein if there exists a switch that need not operate as a result of the change of the route information set in said switch in accordance with the migration of the virtual machine, said management device puts the switch that need not operate into a non-operating status.

4. The power saving system according to any one of claims 1 to 3,
   wherein said switch and said plurality of servers are installed in a rack,
   wherein said management device migrates a virtual machine operating on a server in said rack to a server in another rack,
   said controller changes the route information set in said switch to pass through a switch outside of said rack, and
   said management device puts a whole of said rack including said switch and said plurality of servers into a non-operating status.

5. The power saving system according to claim 4,
   wherein said management device controls an equipment making adjustment to a circumference environment condition of the rack and changes or stops the adjustment of the circumference environment condition of said rack that is put into the non-operating status.

6. The power saving system according to claim 5,
   wherein said management device searches for a target that can be put into a non-operating status in units of a group of racks whose circumference environment condition is under control of said equipment, and then searches for a target that can be put into a non-operating status in units of a rack and then in units of a server.

7. The power saving system according to claim 5 or 6, wherein said management device comprises:

   an air-conditioning management unit configured to control an air-conditioning equipment that cools a rack belonging to an air-conditioning group being a target of air-conditioning, and to adjust or stop cooling by said air-conditioning equipment if all racks belonging to said air-conditioning group are put into the non-operating status;
   a lighting management unit configured to control a lighting equipment that lights a rack belonging to a lighting group being a target of lighting, and to adjust or stop lighting by said lighting equipment if all racks belonging to said lighting group are put into the non-operating status; and
   a power-supply management unit configured to control a power-supply equipment that supplies power to a rack belonging to a power-supply group being a target of power-supply, and to adjust or stop power supply by said power-supply equipment if all racks belonging to said power-supply group are put into the non-operating status.

8. A computer that is used as at least one of said management device and said controller in the power saving system according to any one of claims 1 to 7.

9. A power saving method performed by a computer, comprising:

   monitoring communication information of a service provided by virtual machines respectively operating on a plurality of servers;
   migrating a virtual machine to another server based on service load calculated from said communication information with respect to each of the virtual machines, and putting a server having no operating virtual machine into a non-operating status;
   setting route information with respect to each flow in a switch forwarding communication packets regarding said service; and
   changing the route information set in said switch in accordance with the migration of the virtual machine.

10. The power saving method according to claim 9, further comprising:

calculating said service load based on communication load in a network depending on said service and processing load in a server depending on said service.

**11.** The power saving method according to claim 9 or 10, further comprising:

putting, if there exists a switch that need not operate as a result of the change of the route information set in said switch in accordance with the migration of the virtual machine, the switch that need not operate into a non-operating status.

**12.** The power saving method according to any one of claims 9 to 11, further comprising:

migrating a virtual machine operating on a server in a rack in which said switch and said plurality of servers are installed to a server in another rack;
changing the route information set in said switch to pass through a switch outside of said rack; and
putting a whole of said rack including said switch and said plurality of servers into a non-operating status.

**13.** The power saving method according to claim 12, further comprising:

controlling an equipment making adjustment to a circumference environment condition of the rack; and
changing or stopping the adjustment of the circumference environment condition of said rack that is put into the non-operating status.

**14.** The power saving method according to claim 13, further comprising:

searching for a target that can be put into a non-operating status in units of a group of racks whose circumference environment condition is under control of said equipment, and then searching for a target that can be put into a non-operating status in units of a rack and then in units of a server.

**15.** The power saving method according to claim 13 or 14, further comprising:

controlling an air-conditioning equipment that cools a rack belonging to an air-conditioning group being a target of air-conditioning, and adjusting or stopping cooling by said air-conditioning equipment if all racks belonging to said air-conditioning group are put into the non-operating status;
controlling a lighting equipment that lights a rack belonging to a lighting group being a target of lighting, and adjusting or stopping lighting by said lighting equipment if all racks belonging to said lighting group are put into the non-operating status; and
controlling a power-supply equipment that supplies power to a rack belonging to a power-supply group being a target of power-supply, and adjusting or stopping power supply by said power-supply equipment if all racks belonging to said power-supply group are put into the non-operating status.

**16.** A storage medium storing a power saving program that causes a computer to perform the power saving method according to any one of claims 9 to 15.

Fig. 1

MANAGEMENT DEVICE — 20

21 — INTEGRATED MANAGEMENT UNIT

22 — EQUIPMENT MANAGEMENT UNIT
- 221 — AIR-CONDITIONING MANAGEMENT UNIT
- 222 — LIGHTING MANAGEMENT UNIT
- 223 — POWER-SUPPLY MANAGEMENT UNIT

23 — OFC
24 — SERVICE MANAGEMENT UNIT
25 — SERVER MANAGEMENT UNIT
26 — STORAGE MANAGEMENT UNIT
27 — VM MANAGEMENT UNIT

IN SERVER (LOGICAL) — 1221-k
1221-1 — VM ... VM
1222 — VM MONITOR

SERVER ROOM — 10

INTERIOR EQUIPMENT — 11
- 111 — AIR-CONDITIONING EQUIPMENT
- 112 — LIGHTING EQUIPMENT
- 113 — POWER-SUPPLY EQUIPMENT

RACK — 12-1
- 121-1 — OFS
- 121-x — OFS
- 122-1 — SERVER
- 122-y — SERVER
- 123-1 — STORAGE
- 123-z — STORAGE

RACK — 12-n
- 121-1 — OFS
- 121-x — OFS
- 122-1 — SERVER
- 122-y — SERVER
- 123-1 — STORAGE
- 123-z — STORAGE

EP 2 487 837 A1

# Fig. 2

```
    ┌──────────┐        ┌──────────┐        ╭──────────────────╮
    │  OFS 121 │        │  OFC 23  │        │     SERVICE       │
    └──────────┘        └──────────┘        │ MANAGEMENT UNIT 24│
                                            ╰──────────────────╯
```

| | | |
|---|---|---|

PACKET RECEPTION ⟋S1

NOTIFY, IF FIRST PACKET ⟋S2

NOTIFY ARRIVAL OF FIRST PACKET ⟋S3

SEARCH CORRESPONDING SERVICE ⟋S4

S5⟋ INDICATE END-POINT AND INSTRUCT TO GENERATE COMMUNICATION PATH

GENERATE COMMUNICATION PATH BASED ON TOPOLOGY INFORMATION ⟋S6

GENERATE FLOW DEFINITION INFORMATION FOR OFS ⟋S7

SET FLOW DEFINITION INFORMATION IN OFS ⟋S8

# Fig. 3

| OFS 23 | SERVICE MANAGEMENT UNIT 24 | VM MANAGEMENT UNIT 27 |

**C1** — COLLECT INFORMATION FROM OFS AND NOTIFY FLOW

**C2** — CLASSIFY FLOW WITH RESPECT TO EACH SERVICE AND RETAIN NUMBER OF SERVICES

**C3** — INSTRUCT PROCESSING DEPENDING ON NUMBER OF SERVICES

**C4** — REDUCE NUMBER OF SERVICES, IF NUMBER OF SERVICES IS NOT LESS THAN THRESHOLD VALUE

**C5** — INCREASE NUMBER OF SERVICES, IF NUMBER OF SERVICES IS LESS THAN THRESHOLD VALUE

EP 2 487 837 A1

START

CALCULATE AMOUNT OF
NECESSARY RESOURCE — R1

CALCULATE NUMBER OF
NECESSARY SERVERS — R2

CALCULATE NUMBER OF
SERVERS TO BE STOPPED — R3

R4

ANY STOPPABLE
AIR-CONDITIONING GROUP ?    NO

YES   R5

MIGRATE VM TO ANOTHER
AIR-CONDITIONING GROUP

R6

ANY STOPPABLE RACK GROUP ?   NO

YES   R7                         NO

MIGRATE VM TO
ANOTHER RACK GROUP

R8

ANY STOPPABLE SERVER ?

YES   R9

MIGRATE VM TO ANOTHER SERVER

END

F i g . 4

# Fig. 5

```
              ┌─────────────┐
              │    START    │
              └─────────────┘
                     │
                     ▼
    ┌──────────────────────────────────────┐
    │   LIST SERVER HAVING UNUSED RESOURCE  │──── D1
    └──────────────────────────────────────┘
                     │
                     ▼
    ┌──────────────────────────────────────┐
    │        LIST MIGRATION-TARGET VM       │──── D2
    └──────────────────────────────────────┘
                     │
                     ▼
    ┌──────────────────────────────────────┐
    │      SELECT ONE VM NOT YET MIGRATED   │──── D3
    └──────────────────────────────────────┘
                     │
                     ▼
    ┌──────────────────────────────────────┐
    │         SELECT SERVER SATISFYING      │──── D4
    │         PREDETERMINED CONDITION       │
    └──────────────────────────────────────┘
                     │
                     ▼
    ┌──────────────────────────────────────┐
    │  TEMPORARILY ASSIGN VM TO SELECTED    │──── D5
    │              SERVER                   │
    └──────────────────────────────────────┘
                     │
                     ▼
    ┌──────────────────────────────────────┐
    │      TEMPORARILY REASSIGN VM OUT OF   │
    │   TEMPORARILY-ASSIGNED VM THAT CAN BE │──── D6
    │        MIGRATED TO ANOTHER SERVER     │
    └──────────────────────────────────────┘
                     │
                     ▼
    ┌──────────────────────────────────────┐
    │    TEMPORARILY REASSIGN VM OUT OF     │──── D7
    │  OPERATING VM THAT CAN BE MIGRATED    │
    │          TO ANOTHER SERVER            │
    └──────────────────────────────────────┘
                     │
                     ▼
    ┌──────────────────────────────────────┐
    │  DETERMINE MIGRATION DESTINATION OF   │──── D8
    │              ALL VMS                  │
    └──────────────────────────────────────┘
                     │
                     ▼
    ┌──────────────────────────────────────┐
    │    DETERMINE SERVER TO WHICH VM IS    │──── D9
    │  TEMPORARILY ASSIGNED, AS MIGRATION   │
    │             DESTINATION               │
    └──────────────────────────────────────┘
                     │
                     ▼
              ┌─────────────┐
              │     END     │
              └─────────────┘
```

# Fig. 6

```
                            ┌─────────┐
                            │  START  │
                            └────┬────┘
                                 │
              ┌──────────────────┼──────────────────────────────────────────┐
              │                  ▼                                           │
              │      ┌───────────────────────────┐  A1                       │
              │      │ SEARCH OPERATING SERVER FOR│                          │
              │      │  SERVER MATCHING CONDITION │                          │
              │      └─────────────┬─────────────┘                          │
              │                    ▼         A2                              │
              │              ╱───────────╲        YES   ┌──────────────┐     │
              │            ╱ ANY MATCHING  ╲──────────▶ │              │     │
              │            ╲   SERVER ?    ╱            │      A8       │     │
              │              ╲───────────╱             ▼                     │
              │                   │NO        ┌──────────────────┐            │
              │                   ▼          │  ASSIGN VM TO     │            │
              │            ╱───────────╲     │ MATCHING SERVER   │            │
              │  YES     ╱ ANY NON-OPER- ╲   └─────────┬────────┘            │
     ┌────────┴───────╱  ATING SERVER IN  ╲            ▼      A9              │
     │ A7          ╲  ╲  OPERATING RACK ? ╱      ╱───────────╲      YES       │
     ▼                 ╲───────────────╱      ╱ ANY NON-      ╲───────────────┘
┌──────────┐                │NO             ╲  ASSIGNED VM ? ╱
│ ACTIVATE │                ▼                 ╲───────────╱
│  SERVER  │          ╱───────────╲                │NO
└────┬─────┘        ╱    ANY        ╲  A4           ▼
     │      A6    ╱  NON-OPERATING    ╲        ┌─────────┐
     │  YES     ╱  RACK IN OPERATING   ╲       │   END   │
┌────┴───────╱  AIR-CONDITIONING        ╲      └─────────┘
▼           ╲         GROUP            ╱
┌──────────┐  ╲───────────────────────╱
│ ACTIVATE │         │NO
│   RACK   │         ▼
└────┬─────┘  ┌──────────────────────┐  A5
     │        │ ACTIVATE NON-OPERATING│
     └────────│  AIR-CONDITIONING GROUP│
              └──────────────────────┘
```

EP 2 487 837 A1

# Fig. 7

```
         ┌─────────┐
         │  START  │
         └─────────┘
              │
              ▼
┌──────────────────────────────┐
│       START PROCESSING       │──── P1
└──────────────────────────────┘
              │
              ▼
┌──────────────────────────────┐
│     SELECT VM TO BE STOPPED   │──── P2
└──────────────────────────────┘
              │
              ▼
┌──────────────────────────────┐
│      PERFORM CONSOLIDATION    │──── P3
└──────────────────────────────┘
              │
              ▼
┌──────────────────────────────┐
│            STOP VM           │──── P4
└──────────────────────────────┘
              │
              ▼
┌──────────────────────────────┐
│  RELEASE SERVER RESOURCE OF   │──── P5
│         STOPPED VM           │
└──────────────────────────────┘
              │
              ▼
┌──────────────────────────────┐
│  STOP SERVER HAVING NO        │──── P6
│        OPERATING VM          │
└──────────────────────────────┘
              │
              ▼
┌──────────────────────────────┐
│ INVESTIGATE RIPPLE EFFECTS OF │──── P7
│       STOPPING SERVER        │
└──────────────────────────────┘
              │
              ▼
         ┌─────────┐
         │   END   │
         └─────────┘
```

<div align="center">**INTERNATIONAL SEARCH REPORT**</div>

| | International application No. |
|---|---|
| | PCT/JP2010/067414 |

**A. CLASSIFICATION OF SUBJECT MATTER**
*H04L12/28*(2006.01)i, *G06F1/32*(2006.01)i, *G06F9/46*(2006.01)i, *G06F9/50*
(2006.01)i

According to International Patent Classification (IPC) or to both national classification and IPC

**B. FIELDS SEARCHED**

Minimum documentation searched (classification system followed by classification symbols)
H04L12/28, G06F1/32, G06F9/46, G06F9/50

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br><br>A | JP 2009-169858 A (NEC Corp.),<br>30 July 2009 (30.07.2009),<br>entire text<br>& US 2009/0187775 A1 | 1-5,7-13,<br>15-16<br>6,14 |
| Y<br><br>A | NEC Corp., "Shin Sedai NW ni Muketa<br>Programmable Flow Switch o Shisaku shi<br>Nichibei-kan deno Jissho Jikken ni Seiko,<br>29 October 2008 (29.10.2008): Press Release \|<br>NEC", [online], 29 October 2008 (29.10.2008),<br>[retrieval date 17 December 2010 (17.12.2010)],<br>Internet <URL:http://www.nec.co.jp/press/ja/<br>0810/2903.html> | 1-5,7-13,<br>15-16<br>6,14 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 December, 2010 (17.12.10) | 28 December, 2010 (28.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/067414

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-281008 A  (Toshiba Corp.),<br>03 October 2003 (03.10.2003), | 1-5,7-13,<br>15-16 |
| A | paragraphs [0016] to [0018]; fig. 1 to 2, 4<br>& US 2003/0225904 A1 | 6,14 |
| Y | JP 2007-189848 A  (Hitachi, Ltd.),<br>26 July 2007 (26.07.2007), | 5,7,13,15 |
| A | paragraphs [0012] to [0014]; fig. 1<br>(Family: none) | 6,14 |
| A | JP 2008-276320 A  (NEC Corp.),<br>13 November 2008 (13.11.2008),<br>entire text<br>(Family: none) | 6,14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009169858 A
- JP 2009176033 A
- JP 2003281008 A
- JP 2009181571 A
- JP 2009233366 A